# EUROPÄISCHE PATENTSCHRIFT

(11) **EP 2 922 692 B1**
(45) Veröffentlichungstag und Bekanntmachung des Hinweises auf die Patenterteilung: **11.04.2018**
(21) Anmeldenummer: 13801473.3
(22) Anmeldetag: 19.11.2013
(51) Int. Cl.: B29D 11/00, G02B 5/18, G02C 7/02

(54) **ERZEUGUNG MIKROSTRUKTURIERTER BRILLENGLÄSER MITTELS TRANSFERSCHICHT**
PRODUCING MICROSTRUCTURED SPECTACLE LENSES BY MEANS OF TRANSFER LAYER
PRODUCTION DE VERRES DE LUNETTES MICROSTRUCTURÉS AU MOYEN D'UNE COUCHE TRANSFERT

(30) Priorität: 23.11.2012 DE 102012023025
(43) Veröffentlichungstag der Anmeldung: 30.09.2015
(73) Patentinhaber: Rodenstock GmbH, 80687 München (DE)
(72) Erfinder: TRUMM, Stephan, 80999 München (DE); HUBER, Karl, 94209 Regen (DE); SCHREDER, Ferdinand, 94227 Zwiesel (DE); KÖLL, Erich, 94469 Deggendorf (DE); SCHUSTER, Herbert, 82275 Emmering (DE); BECK, Reiner, 95447 Bayreuth (DE); ZINNER, Herbert, 85296 Rohrbach (DE); MÜLLER, Werner, 75443 Ötisheim (DE)
(74) Vertreter: Müller-Boré & Partner Patentanwälte PartG mbB
(86) Internationale Anmeldenummer: PCT/EP2013/003485
(87) Internationale Veröffentlichungsnummer: WO 2014/079559

(56) Entgegenhaltungen:
- US-A- 5 116 112
- US-A1- 2004 095 552
- US-A1- 2011 210 368
- US-B1- 6 491 851

## Beschreibung

Die vorliegende Erfindung betrifft ein Verfahren zur Herstellung einer Linse, insbesondere eines Brillenglases, die an mindestens einer Linsenfläche eine insbesondere diffraktive Mikrostruktur aufweist.

Diffraktive Optiken nutzen oft eine Kombination eines refraktiven und eines diffraktiven Effekts an zumindest einer Oberfläche oder Grenzfläche. Damit lassen sich selbst in komplexen Optiken mit hoher Funktionsdichte bereits mit vergleichsweise wenigen Linsenelementen sehr gute Abbildungsqualitäten erreichen. Vor allem für Anwendungen, in denen nur eine einzige Linse genutzt wird, können durch eine Kombination aus refraktiver und diffraktiver Wirkung Abbildungsfehler reduziert werden, die ansonsten nur durch mehrschichtige Linsen oder durch Linsen mit Brechungsindexgradienten unterdrückt werden können. Insbesondere bei Linsen, wie z.B. Brillengläsern, welche aus einem dispergierenden Material aufgebaut sind, werden gelegentlich diffraktive Mikrostrukturen an einer Linsenoberfläche genutzt, um beispielsweise Farbsäume aufgrund chromatischer Fehler der Linse zu reduzieren. Einige Beispiele für ein Design von diffraktiven Strukturen zur Farbsaumkorrektur sind beispielsweise aus DE 10 2010 051 627 A1, DE 10 2010 051 637 A1, DE 10 2010 051 645 A1 und DE 10 2010 051 762 A1 bekannt.

US 2011 / 210 368 A1 offenbart eine "micro-composite" Linse und ein Verfahren zu deren Herstellung, wobei die Linse zur Erhöhung der Lichtauskopplung aus LEDs dient. Insbesondere werden dabei verschiedene Verfahrensschritte offenbart, um die herzustellende Linse mit einer strukturierten Oberfläche zu versehen. Gemäß der US 2011 / 210 368 A1 wird zunächst eine Struktur (micro-composite pattern) auf einen Film (thin film substrate) übertragen, um sodann als strukturierter Teil einer Gießform zum Gießen der Linse zu dienen. Nach Aushärtung der gegossenen Linse wird der als Gießform dienende Film von der Linse entfernt.

Die Druckschrift US 5 116 112 A offenbart ein Verfahren zum Gießen von Kontaktlinsen, bei welchen der die Iris bedeckende Teil mittels einer farbigen Struktur gefärbt ist. Dabei wird gemäß einer in dieser Druckschrift beschriebenen Ausführungsform zunächst die gewünschte Struktur in ein Metallstück geätzt, die geätzte Struktur mit Farbe gefüllt und anschließend mittels eines Gummistempels (soft silicone rubber transfer stamp) auf die Gießform für die Kontaktlinse aufgetragen und eventuell ausgehärtet. Danach wird die Kontaktlinse in der Gießform gegossen, woraufhin die farbige Struktur in den Linsenkörper integriert wird und somit die fertige Kontaktlinse keine Erhebungen (bumps) an der Oberfläche aufweist.

Die Druckschrift US 6 491 851 B1 offenbart ein Verfahren zur Herstellung einer Linse mit einer mikrostrukturierten Oberfläche. Gemäß einer Ausführungsform wird dabei zunächst die Mikrostruktur auf einem Einsatz ausgebildet, welcher anschließend in eine Gießform eingesetzt wird. Anschließend wird beim Gießen der Linse die Mikrostruktur im Linsenkörper (oder einer evtl. vorgesehenen Beschichtung des Linsenkörpers) geformt. Gemäß einer weiteren Ausführungsform wird die Mikrostruktur direkt in die Linse mittels eines Stempels übertragen (die-stamping process).

Die Druckschrift US 2004 / 095 552 A1 offenbart ein Verfahren zur Herstellung einer farbigen Kontaktlinse. Dabei wird zunächst ein Teil des Kontaktlinsenkörpers gegossen und anschließend ein oberer Teil des Linsenkörpers entfernt. Die dadurch freigelegte Oberfläche wird im Bereich der Iris mit Farbe bedeckt. Anschließend wird erneut ein oberer Teil des Linsenkörpers darüber gegossen, woraufhin sich der gefärbte Teil im Inneren der Kontaktlinse befindet.

Eine der Herausforderungen bei der Nutzung diffraktiver Strukturen ist jedoch deren großer Fertigungsaufwand. Insbesondere für die Fertigung rotationssymmetrischer Strukturen haben sich spanende Bearbeitungsverfahren (z.B. Diamantdrehen) etabliert. Dabei kann entweder die herzustellende Linse direkt spanend bearbeitet werden, oder es wird eine Gießform oder ein Stempel spanend bearbeitet, um darin ein Negativ der auf der Linse vorzusehenden Mikrostruktur auszubilden, die dann durch Gießen der Linse oder durch Stempeln bzw. Prägen auf die entsprechende Linsenfläche übertragen wird.
Je nach Linsenmaterial sind jedoch nicht immer alle Strukturierungsverfahren einsetzbar. So sind beispielsweise duroplastische Werkstoffe (z.B. Perfalit 1.67) als Grundmaterialien für Linsen, insbesondere Brillengläser weit verbreitet. Diese Klasse von Polymeren widersetzt sich in vielen Fällen jedoch einer nachträglichen (thermischen) Umformung. Auch eine nachträgliche spanende oder lithographische Bearbeitung ist oft kaum oder nur mit unbefriedigender Strukturqualität oder mit sehr großem Aufwand möglich. In vielen Fällen ist es daher vorteilhaft oder gar die einzig technologisch sinnvolle Möglichkeit, die Mikrostruktur im Zuge eines Gießens einer Linse, insbesondere eines Brillenglases, in das Volumenmaterial einzubringen. Dazu muss das zunächst flüssige (oder viskose) Volumenmaterial (z.B. durch Polymerisation von Monomeren) ausgehärtet werden. Danach kann die mikrostrukurierte Gießform zur Herstellung der nächsten Linse verwendet werden. Aufgabe der vorliegenden Erfindung ist es, ein kostengünstiges Verfahren zur Herstellung einer Linse mit einer Mikrostruktur hoher Qualität und Präzision bereitzustellen. Diese Aufgabe wird durch ein Verfahren mit den im Anspruch 1 angegebenen Merkmalen gelöst. Bevorzugte Ausführungsformen sind Gegenstand der abhängigen Ansprüche.
Somit bietet die Erfindung ein Verfahren zur Herstellung einer Linse, insbesondere eines Brillenglases, mit einer Mikrostruktur auf zumindest einer Linsenfläche. Die Mikrostruktur dient insbesondere als diffraktives Gitter für sichtbares Licht, vorzugsweise zur Farbsaumkorrektur in einem Brillenglas. Besonderes bevorzugt wird im Falle eines Brillenglases die Mikrostruktur auf der Vorderfläche des Brillenglases vorgesehen. Dabei wird erfindungsgemäß zunächst eine Strukturträgerschicht (auch als Strukturträgerfolie bezeichnet) bereitgestellt, welche an einer Oberfläche eine Mikrostruktur aufweist. Diese Mikrostruktur entspricht dabei insbesondere dem Negativ der an bzw. in der Linse auszubildenden Mikrostruktur. Ein Linsenhauptkörper, insbesondere die eigentlich herzustellende Linse bzw. ein Linsenrohling, der später zur eigentlichen Linse weiterverarbeitet wird, wird dann an die Mikrostruktur der Strukturträgerschicht gegossen.

Die Strukturträgerschicht kann dann zumindest so lange an der Linse bzw. dem Linsenhauptkörper verbleiben, bis diese(r) ausgehärtet ist. Dabei ist während des Gießens des Linsenhauptkörpers die Strukturträgerschicht mit der der Mikrostruktur abgewandten Fläche an einem Stützsubstrat angeordnet. Das Stützsubstrat dient somit zusammen mit der Strukturträgerschicht als Gießformschale zum Gießen des Linsenhauptkörpers, wobei das Stützsubstrat insbesondere zum Stützen der im Vergleich dazu vorzugsweise dünneren, insbesondere flexiblen Strukturträgerschicht dient. Vorzugsweise weist die Strukturträgerschicht also eine geringere Dicke und/oder eine geringere Materialfestigkeit bzw. Materialhärte auf als das Stützsubstrat.

Insgesamt kann eine Strukturträgerschicht, welche dann zusammen mit einem Stützsubstrat als Gießform für die Linse genutzt wird, beispielsweise durch Abgießen, Tauchen, Aufspinnen, Sputtern oder Prägen sehr viel einfacher und damit auch kostengünstiger hergestellt, insbesondere mikrostrukturiert werden als eine herkömmliche, massive Gießform. Dabei können insbesondere Materialien eingesetzt werden, die sich durch Abgießen und/oder Tauchen und/oder Aufspinnen und/oder Sputtern bzw. Beschichten aus der Gasphase und/oder Umformen bzw. Prägen sehr einfach mikrostrukturieren lassen. Die zur Mikrostrukturierung der Strukturträgerschicht nötigen Werkzeuge, deren Herstellung selbst wiederum vergleichsweise aufwändig und damit kostspielig sein könnte, stehen nach der vergleichsweise einfachen Herstellung der Strukturträgerschicht wieder für weitere Herstellungsschritte zur Verfügung.

Eine Zykluszeit dieser Werkzeuge ist somit vergleichsweise kurz, jedenfalls verglichen mit gegebenenfalls ähnlich teueren herkömmlichen Gießformen beim Gießen von Linsen, welche so lange an der herzustellenden Linse verbleiben müssen, bis diese ausgehärtet sind. Dieser Prozess kann typischerweise mehreren Stunden bis wenige Tage in Anspruch nehmen, was eine entsprechend lange Zykluszeit der herkömmlichen mikrostrukturierten Gießformen erfordert.

Beim erfindungsgemäßen Verfahren hingegen kann die Strukturträgerschicht zumindest bis zur Aushärtung der herzustellenden Linse am Linsenhauptkörper verbleiben, ohne dass damit sehr viel teurere Werkzeuge blockiert werden. Selbst wenn ein nicht mikrostrukturiertes Stützsubstrat zum Einsatz kommt und dies ebenfalls bis zur Aushärtung des Linsenhauptkörper an der herzustellenden Linse verbleibt, reduziert dies die Kosten gegenüber herkömmlichen Verfahren wesentlich, da das Stützsubstrat ohne Mikrostruktur sehr viel günstiger und damit in größeren Stückzahlen bereitgestellt werden kann. Die ebenfalls im Vergleich zu herkömmlichen mikrostrukturierten Gießformen wesentlich kostengünstigere Strukturträgerschicht könnte sogar nach nur wenigen Abgießzyklen weggeworfen werden bzw. verschlissen sein. Es wäre auch möglich, die Strukturträgerschicht jeweils nur einmal zu verwenden und anschließend zu entsorgen. Besonders bevorzugt beleibt die Strukturträgerschicht zumindest während der weiteren Bearbeitung der Linse oder sogar während der spätere Benutzung als Schutzschicht auf der Linse, um die Mikrostruktur vor Beschädigungen oder Verschmutzungen zu schützen. Besagte Mikrostrukturen sind auf Grund ihrer Dimension (typischerweise 0,3-5µm axial, 1-500µm lateral) anfällig gegen Verschmutzung und Verkratzung. Letzteres gilt in besonderem Maße, wenn die Struktur auf vergleichsweise weichen organischen Materialien aufgebracht wird. Deswegen ist es vorteilhaft, diese Struktur sowohl im Endprodukt (Linse) als auch während der Fertigung zu schützen.

Das Verfahren umfasst nach dem Gießen, insbesondere nach einem zumindest teilweisen Aushärten des Linsenhauptkörpers, ein Ablösen des Stützsubstrats von der Strukturträgerschicht, während die Strukturträgerschicht am Linsenhauptkörper verbleibt.

Vorzugsweise weist die Strukturträgerschicht eine maximale Dicke von nicht mehr als etwa 1 mm, besonders bevorzugt nicht mehr als etwa 0,5 mm, am meisten bevorzugt nicht mehr als etwa 0,25 mm auf. Besonders bevorzugt weist die Strukturträgerschicht eine im Wesentlichen konstante Schichtdicke auf. In anderen bevorzugten Ausführungsformen können auch dünnere Schichten mit Dicken von einigen 10 Mikrometern (z.B. etwa 20 - 40 µm) eingesetzt werden, die insbesondere durch Verfahren wie beispielsweise Spincoating oder Tauchgießen erzeugt werden können.

In einer besonders bevorzugten Ausführungsform weist die Strukturträgerschicht eine (maximale) Dicke auf, die geringer ist als eine (minimale) Dicke des Linsenhauptkörpers. Selbst wenn die Strukturträgerschicht dann durch ein Gießen mittels einer (herkömmlichen) Gießform hergestellt wird, härtet die Strukturträgerschicht aufgrund der geringen Dicke viel schneller aus als eine Linse mit der Dicke der herzustellenden Linse bzw. des Linsenhauptkörpers. Damit bleibt die Zykluszeit der kostspieligen (herkömmlichen) Gießform sehr kurz. Außerdem können mit der Erfindung auch andere Prozesse für die Herstellung der Strukturträgerschicht verwendet werden, wie später noch ausgeführt wird, mit denen die Zykluszeit der mikrostrukturierten Werkzeuge weiter verringert werden kann.

In einer bevorzugten Ausführungsform weist die Strukturträgerschicht einen Brechungsindex auf, der sich vom Brechungsindex des Linsenhauptkörpers unterscheidet. Auf diese Art und Weise kann die Strukturträgerschicht als Schutzschicht auf dem Linsenhauptkörper verbleiben und verhindern, dass die Mikrostruktur (insbesondere in Form eines diffraktiven Gitters) durch nachfolgende Prozessschritte der Linsenherstellung beschädigt oder während dieser Prozesse verunreinigt wird. Aufgrund des Brechungsindexunterschieds bleibt die Mikrostruktur optisch wirksam, insbesondere kann die Mikrostruktur als diffraktives Gitter (insbesondere für sichtbares Licht) wirken.

Dabei wird die Strukturträgerschicht insbesondere mit einer ausreichenden optischen Transparenz vorgesehen, um beispielsweise die Verwendung der Linse einschließlich der Strukturträgerschicht als Brillenglas zu ermöglichen. Die Strukturträgerschicht bleibt in diesem Fall vorzugsweise als Schutzschicht auf dem Brillenglas und kann damit die Mikrostruktur beispielsweise auch für nachfolgende Arbeitsschritte beim Optiker (z.B. Randen der Brillengläser) sowie während des Tragens der fertigen Brille vor Beschädigungen und Verunreinigungen schützen.

Vorzugsweise weist die Strukturträgerschicht auf der der Mikrostruktur abgewandten Seite der Strukturträgerschicht eine weitgehend glatte Fläche auf, die insbesondere nicht der Topographie der Mikrostruktur sondern lediglich der globalen Krümmung der herzustellenden Linse, insbesondere des Brillenglases, folgt. Diese im Wesentlichen glatte Oberfläche der Strukturträgerschicht ist damit wesentlich weniger empfindlich gegen Beschädigungen oder Verschmutzungen. Außerdem bietet dies die Möglichkeit, sehr einfach zusätzliche Schichten (z.B. Antireflexschichten, Topcoating, Hartschichten) aufzubringen, die auf der nichtebenen Fläche der Mikrostruktur nicht (so leicht) aufgebracht werden könnten oder deren Wirkung negativ beeinflussen könnten.

Soweit die Strukturträgerschicht als Schutzschicht auf der Linse verbleibt, wird bereits bei der Auslegung der Mikrostruktur die Strukturträgerschicht und ihre optischen Eigenschaften - insbesondere der Brechungsindex - berücksichtigt. Vorzugsweise beträgt eine Differenz zwischen dem Brechungsindex der Strukturträgerschicht und dem Brechungsindex des Linsenhauptkörpers (für sichtbares Licht) zumindest etwa 0,05, vorzugsweise zumindest etwa 0,1, noch mehr bevorzugt zumindest etwa 0,15, am meisten bevorzugt zumindest etwa 0,2. So könnte beispielsweise der Linsenhauptkörper einen Brechungsindex von etwa 1,6 aufweisen, während die Strukturträgerschicht mit einem Brechungsindex von etwa 1,5 vorgesehen wird. In einem anderen Beispiel könnte der Brechungsindex des Linsenhauptkörpers bei etwa 1,67 liegen, während der die Strukturträgerschicht mit einem Brechungsindex von etwa 1,6 vorgesehen wird. Um eine größere Differenz im Brechungsindex zu erreichen, könnte der Linsenhauptkörper beispielsweise einen Brechungsindex von 1,67 aufweisen, während die Strukturträgerschicht mit einem Brechungsindex von etwa 1,5 bereitgestellt wird. Für eine noch größere Differenz im Brechungsindex ist auch eine beispielhafte Kombination mit einem Brechungsindex von etwa 1,74 für den Linsenhauptkörper und etwa 1,5 für die Strukturträgerschicht möglich.

Weiterhin ist es bevorzugt, wenn das Material der Strukturträgerschicht optisch klar und - falls nicht anderweitig gewünscht - im sichtbaren Bereich des Lichts gleichmäßig transparent ist. Die Strukturträgerschicht selbst muss an sich nicht besonders hart sein, da auch eine zusätzliche Hartschicht aufgebracht werden kann, sollte aber vorzugsweise dennoch eine ausreichende Haft- und Verschleißfestigkeit für die weitere Bearbeitung gewährleisten. Eine geringere Härte der Strukturträgerschicht begünstigt die einfachere Herstellung der Mikrostruktur. Die Materialfestigkeit sollte lediglich ausreichend groß sein, um das Gießen des Linsenhauptkörpers zu ermöglichen, ohne dass dabei die Mikrostruktur beschädigt wird.

Auch wenn eine hohe Härte nicht notwendig ist (z.B. bei Verwendung des Transshade mit/ohne Photochrome), stellt die Transferschicht in einer bevorzugten Ausführungsform (z.B. bei Verwendung von TS56T) zugleich die Hartschicht dar.

Während die Strukturträgerschicht auf der dem Linsenhauptkörper zugewandten Fläche der Topographie der Mikrostruktur folgt, wird diese Mikrostruktur auf der dem Linsenhauptkörper abgewandten Seite der Strukturträgerschicht vorzugsweise nicht abgebildet. Bevorzugt weist die dem Linsenhauptkörper abgewandte Fläche der Strukturträgerschicht eine Geometrie auf, bei der die Strukturträgerschicht im Wesentlichen der Form der entsprechenden Fläche der herzustellenden Linse (beispielsweise also einer sphärischen, einer asphärischen aber rotationssymmetrischen Fläche oder einer Freiformfläche) folgt (besonders bevorzugt äquidistant), ohne dabei die Struktur abzubilden. Bevorzugt wird ferner eine auf der der Mikrostruktur abgewandten Seite glatte Strukturträgerschicht oder eine Strukturträgerschicht, die speziellen Anforderungen (z.B. definierte Rauhigkeiten zur Verbesserung der Haftung der folgenden Schicht) genügt.

Die Dicke der Schicht wird vorzugsweise derart gewählt, dass sie über der Wellenlänge des verwendeten Lichts liegt. Sollen dagegen durch die Mikrostruktur andere (optische) Effekte erzielt werden (z.B. Erzeugung eines effektiven Brechungsindex), kann die Dicke entsprechend diesen Anforderungen ausgelegt werden. Besonders bevorzugt weist die Strukturträgerschicht eine Dicke von zumindest etwa 5 µm, vorzugsweise zumindest etwa 20 µm, besonders bevorzugt zumindest etwa 100 µm, am meisten bevorzugt zumindest etwa 200 µm auf. Damit werden insbesondere Interferenzerscheinungen (hauptsächlich Fabry-Perot-Interferenzen) innerhalb der Strukturträgerschicht wirkungsvoll unterdrückt oder verhindert. Dies lässt sich dadurch erklären, dass bei diesen Schichtdicken die typische Kohärenzlänge des üblichen Umgebungslichts (zumindest teilweise) kürzer wird als die Schichtdicke, weshalb Interferenzeffekte vernachlässigbar werden. Bei der Festlegung der Dicke sind ferner die Stabilität des Materials sowie prozess-technische Gegebenheiten zu berücksichtigen, was zu deutlich höheren Dicken bis zu 500 µm oder sogar über 1 mm führen kann.

Wie bereits erwähnt, umfasst das Bereitstellen der Strukturträgerschicht vorzugsweise ein Gießen der Strukturträgerschicht mittels einer Gießform, die eine entsprechend mikrostrukturierte Gießformfläche aufweist. Die Strukturträgerschicht wird somit vorzugsweise zwischen zwei Gießformen, von denen eine die Struktur enthält, gegossen. Der Vorteil dieser Methode liegt darin, dass sie eine sehr genaue Kontrolle der Geometrie ermöglicht. Bei einer entsprechend geringen Dicke der Strukturträgerschicht härtet diese wesentlich schneller aus als eine dicke Linse, weshalb auch der mit der mikrostrukturierten Gießformfläche versehene Teil der Gießform sehr viel schneller erneut eingesetzt werden kann. Es ergibt sich also eine sehr viel kürzere Zykluszeit als dies bei herkömmlichen Gießverfahren für Linsen üblich wäre.

Um die eventuell empfindliche Strukturträgerschicht (Folie) zu schützen, wird in einer bevorzugten Ausführungsform die Gießform, die sich auf der der Struktur abgewandte Seite der Strukturträgerschicht befindet, als das bereits beschriebene Stützsubstrat an der Strukturträgerschicht belassen. Das Paket aus Gießform (bzw. Stützsubstrat) und Strukturträgerfolie (Strukturträgerschicht) wird dann als Gießform für den Abguss des Volumenmaterials (Linsenhauptkörper) verwendet.

Vorzugsweise wird aus dem beschriebene Gießformpaket, das die Mikrostruktur enthält, und einer konventionellen Gießform, die die Form der der Mikrostruktur abgewandten Seite der herzustellenden Linse bzw. des herzustellenden Blanks wiedergibt, ein Gießpaket erstellt. In dieses Gießpaket bzw. eine zum Abguss geeignete Vorrichtung wird dann das zunächst flüssige Volumenmaterial (z.B. durch Polymerisation von Monomeren) eingebracht und ausgehärtet.

Zur Vermeidung von Blasenbildung beim Aushärteprozess kann es vorteilhaft sein, das Gießpaket des Volumenmaterials zum Aushärten waagrecht zu lagern.

In einer weiteren bevorzugten Ausführungsform umfasst das Bereitstellen der Strukturträgerschicht einen Tauchprozess, bei dem ein entsprechend mikrostrukturierter Stempel in ein Tauchbad gehalten wird, so dass sich am Stempel die Strukturträgerschicht abscheidet. In einer weiteren bevorzugten Ausführungsform umfasst das Bereitstellen der Strukturträgerschicht ein Ausspinnen und/oder Sputtern der Strukturträgerschicht auf ein mikrostrukturiertes Substrat und/oder ein Beschichten eines mikrostrukturierten Substrats aus der Gasphase. Ähnlich zu einem Gießverfahren für die Strukturträgerschicht kann insbesondere bei einer entsprechend geringen Dicke der Strukturträgerschicht diese wesentlich schneller aushärten als eine dicke Linse, was zu entsprechend kurzen Zykluszeit für die entsprechenden mikrostrukturierten Werkzeuge (Stempel bzw. Substrat) führt.

In einer weiteren bevorzugten Ausführungsform umfasst das Bereitstellen der Strukturträgerschicht ein Ausbilden der Mikrostruktur durch ein Umformen, insbesondere Prägen und/oder Stempeln, und/oder durch ein spanendes Bearbeitungsverfahren (z.B. Diamantdrehen) und/oder durch Laserablation und/oder Spritzgießen. Vor allem durch Prägen, Spritzgießen oder Stempeln kann bei ausreichend verformbaren Material für die Strukturträgerschicht in sehr einfacher und kostengünstiger die Strukturträgerschicht hergestellt werden, da an die Härte bzw. Materialfestigkeit der Strukturträgerschicht wesentlich weniger hohe Anforderungen gestellt werden müssen als an herkömmliche, mikrostrukturierte Gießformen. Das Umformen kann insbesondere auch thermisch unterstützt sein. Bei einer lasertechnischen Bearbeitung (z.B. Laserablation) kann die Struktur in einem zweiten Prozess geglättet werden. Dies geschieht bevorzugt durch Aufschmelzen mittels Lasersystemen.

Insbesondere soweit die Strukturträgerschicht als Schutzschicht am Linsenhauptkörper verbleibt, umfasst das Verfahren vorzugsweise nach dem Gießen, insbesondere nach einem zumindest teilweisen Aushärten, des Linsenhauptkörpers ein mechanisches Bearbeiten (z.B. Schleifen, Polieren, Aufrauhen) der der Mikrostruktur abgewandten Fläche der Strukturträgerschicht.

In einem Aspekt löst die Erfindung das Problem der langen Zykluszeit insbesondere dadurch, dass die Struktur (z.B. diffraktive Mikrostruktur) nicht direkt in das Volumenmaterial der herzustellenden Linse abgegossen wird, sondern zunächst als Negativ in eine spezielle Trägerschicht (Strukturträgerschicht) und das Volumenmaterial (Linsenhauptkörper) in einem zweiten Schritt an diese Schicht angegossen wird. Da es sich bei der Strukturträgerschicht insbesondere um ein anderes Materialsystem handelt bzw. ein anderes Materialsystem verwendet werden kann als für das Volumenmaterial, zur Aushärtung der Strukturträgerschicht spezielle Verfahren eingesetzt werden können (z.B. thermisch oder UV assistierte Polymerisation), die für das Volumenmaterial unter Umständen nicht in Frage kommen und diese Strukturträgerschicht insbesondere deutlich dünner sein kann (bevorzugt 1-200 µm) als das Volumenmaterial (typischerweise mehrere Millimeter), kann der Aushärteprozess beim Abgießen der Struktur so deutlich schneller (mehrere Minuten an Stelle von mehreren Stunden bis wenigen Tagen) von statten gehen als beim direkten Abguss in das Volumenmaterial.

In einer bevorzugten Ausführungsform bleibt die Strukturträgerschicht nach dem Abgießen des Volumenmaterials als Schutzschicht erhalten und kann damit sowohl die Aufgabe, einen Brechungsindexsprung (beispielsweise bei Verwendung der Struktur zur Erzeugung einer diffraktiven Wirkung) zu realisieren, als auch die Aufgabe erfüllen, als Schutz vor Beschädigungen und/oder Verunreinigungen der Struktur zu wirken. Ein Vorteil dieses Vorgehens besteht darin, dass die Aushärtung des Volumenmaterials (Linsenhauptkörper) zu einer besonders festen und optisch einwandfreien Verbindung der beiden Elemente führt. Dies wird unter anderem dadurch begünstigt, dass auf Additive, die ansonsten zur Trennung des Produkts von der strukturierten Gießform notwendig sind, verzichtet werden kann. Daneben lässt sich durch die direkte Abfolge ein Verschmutzen der Struktur in einem der beiden Elementen oder entlang der Grenze besonders effektiv vermeiden. Weiterhin ist dieses Verfahren durch die Reduktion der notwendigen Prozessschritte besonders wirtschaftlich. Die Strukturträgerschicht kann dann als Schutz während einzelner weiterer oder allen Prozessschritten dienen und zum gegeben Zeitpunkt in der Prozesskette entfernt werden. Alternativ kann sie auch zum Schutz des Produkts während des Gebrauchs z.B. durch einen Brillenträger als integraler Bestandteil in ein Brillenglas integriert werden.

In einer bevorzugten Ausführungsform umfasst das Verfahren zur Herstellung einer mikrostrukturierten Linse ein Bearbeiten der der Mikrostruktur abgewandte Fläche des Volumenmaterials (Linse). In diesem Schritt erhält die der Struktur abgewandte Seite des Volumenmaterials die gewünschte Oberflächengeometrie und -qualität. Dieser Schritt kann insbesondere dann entfallen, wenn diese Seite nicht weiter verarbeitet werden muss. Dies ist beispielsweise der Fall, wenn diese bereits nach dem Abgießen in der gewünschten Geometrie und Qualität vorliegt.

Soweit eine Bearbeitung durchgeführt wird, kommen dafür vorzugsweise Techniken wie Fräsen-Schleifen-Polieren (klassische RGF) oder Schneiden-Polieren ("cut to polish") oder Drehen-Polieren zum Einsatz. Hierfür wird der Blank üblicherweise geblockt. Dazu können beispielsweise Klebefolien oder spezielle Lackschichten in Kombination mit niedrig schmelzenden Metalllegierungen (sogenanntes "Alloy") sowie Grundträger in Kombination mit Klebefolien oder Kleber zum Einsatz kommen. Bei der Wahl des Klebstoffs bzw. des Lacks ist darauf zu achten, dass dieser einerseits ausreichend stark an der Strukturträgerschicht (bzw. dem Volumenmaterial oder einer interimistischen Schutzschicht) haftet, um den Blank sicher zu halten, andererseits aber auch nach der Bearbeitung gelöst werden kann, ohne diese Schichten bzw. das Volumenmaterial zu zerstören. Gegebenenfalls ist die Strukturträgerschicht bzw. das Volumenmaterial nach dem Abblocken und vor der weiteren Verarbeitung zu reinigen und/oder zu glätten.

In einer anderen bevorzugten Ausführungsform wird die Strukturträgerschicht nach dem Abblocken vom Linsenhauptkörper getrennt (abgelöst). Dies ist dahingehend besonders vorteilhaft, dass für das Blocken eine mechanisch sehr gute Verbindung zwischen dem Block und der Strukturträgerschicht und damit eine sehr gute Fixierung der gesamten Linse bzw. des Blanks erreicht werden kann, ohne dass auf die Vermeidung von nachhaltigen Beschädigungen der Strukturträgerschicht geachtet werden muss. Insbesondere ist man nicht auf rückstandsfrei lösbare Verbindungsmechanismen bzw. -materialien beschränkt.

Auch wenn die Strukturträgerschicht in einigen beschriebenen bevorzugten Ausführungsformen als Schutzschicht während einiger oder aller nachfolgenden Prozessschritte oder sogar für das fertige Produkt eingesetzt werden kann, kann sie in anderen bevorzugten Ausführungsformen auch direkt nach dem Gießen des Linsenhauptkörper (bzw. nach dessen zumindest teilweisen aushärten) wieder entfernt also vom Linsenhauptkörper getrennt werden. Zum Entfernen der Strukturträgerschicht können neben mechanischen Verfahren (z.B. abziehen) auch chemische (z.B. Auflösen in sauren bzw. alkalischen Medien; Verwendung von organischen Lösungsmitteln; Unterstützung durch Ultraschall; ...) zum Einsatz kommen.

Insbesondere soweit die Strukturträgerschicht aber sogar im fertigen Produkt (z.B. Brillenglas) erhalten bleiben soll, wird sie vorzugsweise unmittelbar oder mittelbar nach dem Gießen des Linsenhauptkörpers auf der der Mikrostruktur (und damit dem Linsenhauptkörper) abgewandten Seite bearbeitet. Unabhängig davon, ob die Strukturträgerschicht abgelöst werden oder erhalten bleiben soll, kann vorzugsweise in analoger Weise alternativ oder zusätzlich auch die der Mikrostruktur abgewandte Seite des Linsenhauptkörpers bearbeitet werden. Insbesondere können weitere Schichten (z.B. Haftschichten, Hartschichten, AR-Schichten, wasser- bzw. schmutzabweisende Schichten) aufgetragen oder die Linse (das Brillenglas) gefärbt werden. Dieser Schritt kann entfallen, wenn keine weiteren Schichten gewünscht werden.

Insbesondere soweit die Strukturträgerschicht zumindest vorübergehend oder auch im fertigen Produkt erhalten bleiben soll, erhält die der Mikrostruktur abgewandte Seite der Strukturträgerschicht durch eine Bearbeitung nach dem Gießen des Linsenhauptkörpers die gewünschte Oberflächengeometrie und -qualität. Dieser Schritt wird vorzugsweise nach dem Gießen des Volumenmaterials oder der Bearbeitung der der Struktur abgewandte Fläche des Volumenmaterials erfolgen. Beispielhaft seien hierfür folgende Aspekte und Prozesse genannt:

### • Oberflächenbeschaffenheit (z.B. Rauheit)

Dies betrifft beispielsweise die Rauheit der Oberfläche besagter Seite der Strukturträgerschicht. So kann die Oberfläche mechanisch oder chemisch behandelt (z.B. poliert) werden, um die gewünschten Oberflächeneigenschaften zu erzielen. Derartige Eigenschaften können beispielsweise die optisch Qualität, spezielle Eigenschaften zur Verbesserung aufzutragender Schichten oder die Härte betreffen.

### • Geometrie (Form und Dicke)

Die Geometrie der besagten Seite der Strukturträgerschicht nach der Erzeugung, dem Strukturieren, dem Angießen bzw. der Bearbeitung des Volumenmaterials muss nicht der gewünschten Oberfläche der Trägerschicht im fertigen Produkt entsprechen. In diesem Fall muss die gewünschte Geometrie durch mechanische oder chemische Bearbeitung (z.B. schleifen oder ätzen) als eigener Prozessschritt an der entsprechenden Stelle (z.B. nach dem Entformen der Trägerschicht) im Gesamtprozess stattfinden. Ein Beispiel hierfür wäre eine undefinierte Geometrie, wie sie nach dem Aufspinnen (bei der Herstellung der Strukturträgerschicht) vorhanden sein kann. Auch kann die Strukturträgerschicht bewusst mit einer höheren Dicken erzeugt werden, um die Stabilität während des Angießschrittes (Gießen des Volumenmaterials) oder des Entformens zu erhöhen. Auch die Verwendung einer anderen als der für das Produkt gewünschten Krümmung oder flachen Gießform ist möglich.

Die Erfindung wird nachfolgend anhand bevorzugter Ausführungsformen mit Bezug auf die begleitenden Zeichnungen beschrieben. Dabei zeigen:
- Fig. 1: schematische Darstellungen von Linsen (Brillengläsern bzw. Brillenglasrohlingen) mit einer diffraktiven Mikrostruktur an einer ersten Oberfläche, welche mit einem Verfahren gemäß einer bevorzugten Ausführungsform der vorliegenden Erfindung hergestellt wurden; und
- Fig. 2: eine schematische Darstellung einzelner Verfahrensschritte in einem Herstellungsverfahren gemäß einer bevorzugten Ausführungsform der vorliegenden Erfindung.

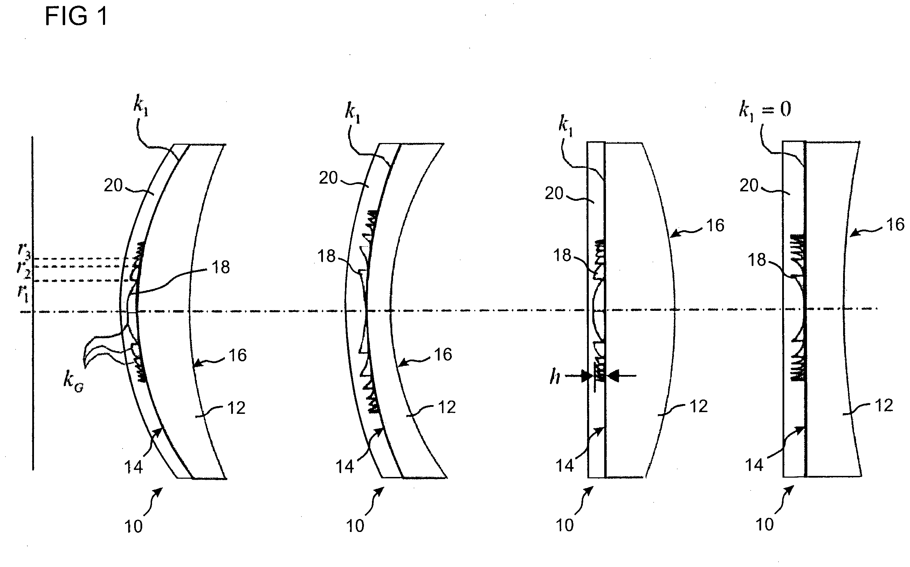

**Fig. 1** veranschaulicht Beispiele von Brillengläsern 10 unterschiedlicher Wirkung und Flächenkrümmung. Dabei weist ein Brillenglaskörper 12 (Linsenhauptkörper) jeweils eine Vorderfläche 14 und eine Rückfläche 16 (augenseitige Fläche) auf. An der Vorderfläche 14 ist jeweils eine diffraktive Mikrostruktur 18 ausgebildet. Die Darstellung der diffraktiven Mikrostruktur 18 soll als rein schematisch angesehen werden. Insbesondere ist die jeweilige Mikrostruktur 18 nicht maßstabsgetreu dargestellt. Üblicherweise ist die Mikrostruktur 18 im Vergleich zum Linsenhauptkörper 12 wesentlich kleiner. Typische Dimensionen diffraktiver Mikrostrukturen liegen vorzugsweise bei etwa 0,3 bis 5 µm in axialer Richtung (also in Dickenrichtung des Brillenglases) und bei etwa 1 bis 500 µm in lateraler Richtung. Von links nach rechts sind in Fig. 1 nacheinander beispielhaft eine Pluslinse mit konvexer Basiskurve (Vorderfläche 14), eine Minuslinse mit konvexer Basiskurve (Vorderfläche 14), eine Pluslinse mit planer Basiskurve (Vorderfläche 14) und eine Minuslinse mit planer Basiskurve (Vorderfläche 14) dargestellt.

Je nach Ausführungsform einer erfindungsgemäßen Verfahrens können die Brillengläser 10 in Fig. 1 als endgültiges Produkt oder als Zwischenprodukt (z.B. Blank) angesehen werden. So stellt Fig. 1 die Brillengläser 10 mit einer an der Vorderfläche 14 des Linsenhauptkörpers 12 angeordneten Strukturträgerschicht 20 dar, die im endgültigen Produkt oder zumindest zeitweise während der weiteren Bearbeitung eines Blanks als Schutzschicht vorhanden bleiben kann oder aber unmittelbar oder mittelbar nach einem Gießen bzw. (zumindest teilweisem) Aushärten des Linsenhauptkörpers wieder entfernt wird. Wie die Mikrostruktur 18 ist auch die Strukturträgerschicht 20 in Fig. 1 nicht maßstabsgetreu dargestellt. Vorzugsweise ist die Strukturträgerschicht wesentlich dünner als der Linsenhauptkörper 12. So ist die Strukturträgerschicht 20 vorzugsweise dünner als etwa 1 mm, weiter bevorzugt nicht dicker als etwa 0,5 mm, noch mehr bevorzugt nicht dicker als etwa 0,2 mm. In einigen bevorzugten Ausführungsformen ist die Strukturträgerschicht nicht dicker als etwa 0,1 mm oder sogar nicht dicker als etwa 50 µm. Die Strukturträgerschicht 20 ist aber vorzugsweise zumindest so dick, dass sie die Mikrostruktur 18 vollständig festlegt, um damit als Gießformfläche für das Gießen des Linsenhauptkörpers 12 zu dienen.

Zunächst wird also die Strukturträgerschicht 20 mit der darin ausgebildeten Mikrostruktur 18 hergestellt, um dann den Linsenhauptkörper an die Strukturträgerschicht anzugießen. In einer bevorzugten Ausführungsform wird die Strukturträgerschicht 20 danach wieder vom Linsenhauptkörper 12 entfernt. In einer anderen bevorzugten Ausführungsform bleibt die Strukturträgerschicht 20 während der gesamten weiteren Bearbeitung des Brillenglasrohlings insbesondere bis hin zum fertigen Brillenglas, insbesondere bis hin zur fertigen Brille am Brillenglaskörper 12 und bedeckt und schützt dabei die Mikrostruktur 18.

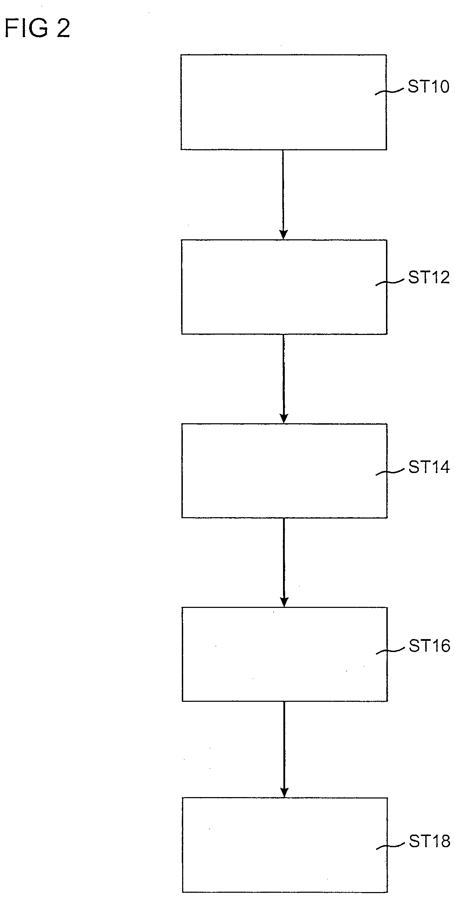

Fig. 2 veranschaulicht schematisch ein Verfahren zur Herstellung einer Linse mit einer Mikrostruktur auf zumindest einer Linsenfläche gemäß einer bevorzugten Ausführungsform der Erfindung. So wird in dieser bevorzugten Ausführungsform zunächst in einem Schritt ST10 eine Strukturträgerschicht mittels einer primären mikrostrukturierten Gießform derart gegossen, dass die Strukturträgerschicht auf einer Seite ein Negativ der Mikrostruktur der herzustellenden Linse aufweist. Die primäre mikrostrukturierte Gießform weist dabei im Wesentlichen ein Positiv der Mikrostruktur der herzustellenden Linse auf.
In einem weiteren Schritt ST12 wird die auf diese Weise gegossene Strukturträgerschicht nach deren Aushärtung zumindest auf der mikrostrukturierten Seite entformt. Vorzugsweise bleibt die andere Formschale (auf der der Mikrostruktur abgewandten Seite der Strukturträgerschicht) als Stützsubstrat für die Stabilisierung der Strukturträgerschicht vorhanden. Damit bildet die Strukturträgerschicht zusammen mit dem Stützsubstrat eine mikrostrukturierte erste Gießformschale die wiederum zusammen mit einer insbesondere nicht mikrostrukturierten zweiten Gießformschale eine sekundäre Gießform, mittels welcher ein Linsenhauptkörper der herzustellenden Linse gegossen werden kann. Dies wiederum geschieht in Schritt ST14.
Nach dem Aushärten des Linsenhauptkörpers wird die entstandene Linse bzw. der Linsenrohling (Blank) in Schritt ST16 entformt. Dazu wird die nicht mikrostrukturierte Formschale vom Linsenhauptkörper sowie das Stützsubstrat von der Strukturträgerschicht gelöst, wobei die Strukturträgerschicht mit dem Linsenhauptkörper verbunden bleibt.
In der in Fig. 2 dargestellten bevorzugten Ausführungsform umfasst das Verfahren außerdem einen Schritt ST18 einer weiteren Bearbeitung der der Mikrostruktur abgewandten Seite des Linsenhauptkörpers (insbesondere einer Rückfläche eines herzustellenden Brillenglases) und/oder der Strukturträgerschicht (insbesondere einer Vorderfläche eines herzustellenden Brillenglases). Dieses Bearbeiten umfasst insbesondere ein mechanisches Bearbeiten insbesondere Fräsen und/oder Schleifen und/oder Polieren der Rückfläche eines Brillenglases, insbesondere eines individuell gefertigten Progressivglases. Dazu wird vorzugsweise an der der Mikrostruktur abgewandten Fläche der Strukturträgerschicht ein Halteelement (Block) befestigt, um den Linsenrohling (Brillenglasrohling) präzise halten bzw. manipulieren zu können. Insbesondere nach Abschluss aller Bearbeitungsschritte, für die der Block genutzt wird, wird dieser wieder entfernt. Alternativ oder zusätzlich umfasst die weitere Bearbeitung in Schritt ST18 ein Veredeln der Linse (des Brillenglases) insbesondere durch Abscheiden einer oder mehrerer weiterer funktionaler Schichten, insbesondere einer Hartschicht und/oder einer Haftschicht und/oder einer AR-Schicht und/oder einer hydrophoben und/oder lipophoben Schicht und/oder einer Färbungsschicht. Soweit diese weitere(n) Schicht(en) nur auf der Rückfläche (zweite Oberfläche) des Brillenglases abgeschieden werden soll(en), kann dies auch erfolgen, solange der Brillenglasrohling noch gebockt ist. Falls aber eine weitere Beschichtung der Vorderfläche erfolgen soll, wird diese weitere Schicht vorzugsweise direkt oder indirekt auf die Strukturträgerschicht aufgebracht.

Insbesondere bei der Herstellung eines Brillenglases wird dieses auch noch gerandet, wobei vorzugsweise auch hierbei sowie für den nachfolgenden Gebrauch des Brillenglases die Strukturträgerschicht als Schutzschicht vorhanden bleibt.

Nachfolgend sind konkrete Beispiele für bevorzugte Materialien für den Linsenhauptkörper sowie für die Strukturträgerschicht angegeben. Diese Materialen sind besonders dann sehr vorteilhaft, wenn die Strukturträgerschicht (insbesondere im Falle eines Brillenglases) als Schutzschicht im endgültigen Produkt erhalten bleiben soll. So eignen sich für den Linsenhauptkörper, also den hauptsächlichen Bestandteil der herzustellenden Linse, welche aus einem Linsenrohling (Blank) gewonnen wird insbesondere folgende Materialien:
- Perfalit 1.5
   -- Chemische Bezeichnung: Polyethylenglycolbisallylcarbonat
   -- Grundlage ist CR 39 (Columbia Resin 39) von PPG.
   -- Brechungsindex 1,5; Abbezahl 58
   -- Duroplast
- PCM 1.54 (Photochrom)
   -- Chemische Bezeichnung: Copolymere, die u.a. Polyethylenglycoldimethacrylat enthalten
   -- Brechungsindex 1,54; Abbezahl 43
   -- Duroplast
- Polycarbonat
   -- Brechungsindex 1,59; Abbezahl 29
   -- Absolut bruchfest! (Sport-, Kinderbereich)
   -- Schlechte Lösemittelbständigkeit (Alkohol, Aceton)
   -- Thermoplast
- Perfalit 1.6
   -- Chemische Bezeichnung: Polythiourethan
   -- Brechnugsindex 1,60; Abbezahl 41
   -- Duroplast
- Perfalit 1.67
   -- Chemische Bezeichnung: Polythiourethan
   -- Brechnugsindex 1,67; Abbezahl 32
   -- Duroplast
- Perfalit/Cosmolit 1.74
   -- Chemische Bezeichnung: Polyepisulfid
   -- Brechnugsindex 1,74; Abbezahl etwa 32
   -- Duroplast

Insbesondere in Verbindung mit einem oder mehreren der oben genannten bevorzugten Materialien des Linsenhauptkörpers werden für die Strukturträgerschicht vorzugsweise eines oder mehrere der folgenden Materialien verwendet:
- TS56T von Tokuyama:
   Dieser Lack mit einem Brechungsindex von 1,49 wird für herkömmliche Brillengläser vorzugsweise für Perfalit 1.5 verwendet. Durch einen Tauchprozesse entstehen vorzugsweise Dicken um 2,2 µm.
- IM-9200 von SDC Technologies:
   Dieser Lack besitzt eine Brechkraft zwischen 1,585 und 1,605 und wird bei herkömmlichen Brillengläsern vorzugsweise nach einer Oberflächenaktivierung auf Perfalit 1,6 und 1.67 aufgebracht. Vorzugsweise werden durch Tauchprozesse Dicken um 2,8 µm erreicht. Variationen von 1,5 µm bis 3,2 µm sind möglich.
- Transhade von Tokuyama:
   Hierbei handelt es sich vorzugsweise um ein photochromes Lacksystem. Durch Spincoating werden vorzugsweise Dicken zwischen 30 µm bis 50 µm erreicht. Typisch sind dabei etwa 39 µm. Darüber hinaus könnten auch Gießprozesse verwendet werden, mit denen sich Dicken über 200 µm erreichen lassen. Dieser Lack ist auch ohne photochrome Farbstoffe erhältlich und kann sowohl thermisch als auch mit UV gehärtet werden.
- Hi Guard 1080 von PPG und Produkte von Tokuyama
   Diese Lacke könnten als Alternative zum TS56T (3) von Tokuyama zum Aufbringen auf Perfalit 1.5 verwendet werden.
- Quarzglas

Weitere bevorzugte Materialien für die Strukturträgerschicht, die sich insbesondere zum Spritzgießen eignen, sind Polycarbonat und PMMA. Auch andere Materialien, die sich zum Spritzgießen eignen, können in bevorzugten Ausführungsform, die sich Spritzgießen zu nutze machen, Anwendung finden. Das "Gießen" im Sinne einer beschriebenen bevorzugten Bereitstellung des Strukturträgerschicht schließt somit insbesondere auch Spritzgießen mit ein.

Besonders bevorzugt ist es, eine möglichst niedrig brechende Strukturträgerschicht (niedriger Brechungsindex n_{S}) mit möglichst hoch brechenden Materialien für den Linsenhauptkörper (hoher Brechungsindex des Brillenglaskörpers n_{K} insbesondere einschließlich der Mikrostruktur) zu kombinieren. Damit wird ein möglichst hoher Brechungsindexsprung erreicht. Bevorzugte Kombinationen sind beispielsweise n_{S} = 1,5 auf n_{K} = 1,6 oder auf n_{K} = 1,67 oder auf n_{K} = 1,74, usw. aber auch n_{S} = 1,6 auf auf n_{K} = 1,67 oder auf n_{K} = 1,74, usw. aber auch n_{S} = 1,67 auf n_{K} = 1,74, usw.. Besonders bevorzugt sind Kombinationen mit einem noch höheren Unterschied im Brechungsindex, insbesondere zumindest 0,2 oder höher.

### Bezugszeichenliste

- 10: Brillenglas(rohling)
- 12: Brillenglaskörper (Linsenhauptkörper)
- 14: Vorderfläche (Basiskurve) des Brillenglases
- 16: Rückfläche des Brillenglases
- 18: Mikrostruktur
- 20: Strukturträgerschicht

## Patentansprüche

1. Verfahren zur Herstellung einer Linse mit einer Mikrostruktur auf zumindest einer Linsenfläche, umfassend:
- Bereitstellen einer Strukturträgerschicht, welche an einer Oberfläche eine Mikrostruktur aufweist; und
- Gießen eines Linsenhauptkörpers an die Mikrostruktur der Strukturträgerschicht,
wobei die Strukturträgerschicht zur Ausbildung der Mikrostruktur mit der der Mikrostruktur abgewandten Fläche an einem Stützsubstrat angeordnet ist, welches zusammen mit der Strukturträgerschicht als Gießformschale zum Gießen des Linsenhauptkörpers verwendet wird, **dadurch gekennzeichnet, dass** das Verfahren nach dem Gießen des Linsenhauptkörpers ein Ablösen des Stützsubstrats von der Strukturträgerschicht umfasst, während die Strukturträgerschicht am Linsenhauptkörper verbleibt.

2. Verfahren nach Anspruch 1, wobei die Strukturträgerschicht mit einer maximalen Dicke von nicht mehr als 1 mm, vorzugsweise nicht mehr als 0,5 mm, am meisten bevorzugt nicht mehr als 0,25 mm bereitgestellt wird.

3. Verfahren nach Anspruch 1 oder 2, wobei die Strukturträgerschicht eine Dicke aufweist, die geringer ist als eine Dicke des Linsenhauptkörpers.

4. Verfahren nach einem der vorangegangenen Ansprüche, wobei die Strukturträgerschicht einen Brechungsindex aufweist, der sich vom Brechungsindex des Linsenhauptkörpers unterscheidet.

5. Verfahren nach einem der vorangegangenen Ansprüche, wobei das Bereitstellen der Strukturträgerschicht ein Gießen der Strukturträgerschicht mittels einer Gießform umfasst, die eine entsprechend mikrostrukturierte Gießformfläche aufweist.

6. Verfahren nach einem der vorangegangenen Ansprüche, wobei das Bereitstellen der Strukturträgerschicht einen Tauchprozess umfasst, bei dem ein entsprechend mikrostrukturierter Stempel in ein Tauchbad gehalten wird, so dass sich am Stempel die Strukturträgerschicht abscheidet.

7. Verfahren nach einem der vorangegangenen Ansprüche, wobei das Bereitstellen der Strukturträgerschicht ein Ausspinnen und/oder Sputtern der Strukturträgerschicht auf ein mikrostrukturiertes Substrat und/oder ein Beschichten eines mikrostrukturierten Substrats aus der Gasphase umfasst.

8. Verfahren nach einem der vorangegangenen Ansprüche, wobei das Bereitstellen der Strukturträgerschicht ein Ausbilden der Mikrostruktur durch Prägen und/oder Stempeln und/oder durch ein spanendes Bearbeitungsverfahren und/oder durch Laserablation umfasst.

9. Verfahren nach einem der vorangegangenen Ansprüche, welche nach dem Gießen des Linsenhauptkörpers ein mechanisches Bearbeiten der der Mikrostruktur abgewandten Fläche der Strukturträgerschicht umfasst.

## Claims

1. Method for the production of a lens having a microstructure on at least one lens face, comprising:
- preparing a structure carrier layer, which has a microstructure on one surface; and
- casting a lens main body on the microstructure of the structure carrier layer,
- the structure carrier layer for forming the microstructure, with the face orientated away from the microstructure, being disposed on a support substrate, which is used together with the structure carrier layer as casting mould shell for casting the lens main body, **characterised in that**
the method includes detachment of the support substrate from the structure carrier layer after casting the lens main body, whilst the structure carrier layer remains on the lens main body.

2. Method according to claim 1, the structure carrier layer being prepared with a maximum thickness of no more than 1 mm, preferably no more than 0.5 mm, most preferably no more than 0.25 mm.

3. Method according to claim 1 or 2, the structure carrier layer having a thickness which is less than a thickness of the lens main body.

4. Method according to one of the preceding claims, the structure carrier layer having a refractive index which differs from the refractive index of the lens main body.

5. Method according to one of the preceding claims, the preparation of the structure carrier layer including casting of the structure carrier layer by means of a casting mould which has a correspondingly microstructured casting mould face.

6. Method according to one of the preceding claims, the preparation of the structure carrier layer including an immersion process in which a correspondingly microstructured die is held in an immersion bath, so that the structure carrier layer is deposited on the die.

7. Method according to one of the preceding claims, the preparation of the structure carrier layer including spincoating and/or sputtering of the structure carrier layer on a microstructured substrate and/or coating of a microstructured substrate from the gas phase.

8. Method according to one of the preceding claims, the preparation of the structure carrier layer including formation of the microstructure by embossing and/or stamping and/or by a material-removing machining method and/or by laser ablation.

9. Method according to one of the preceding claims, which, after casting of the main lens body, includes mechanical machining of the face of the structure carrier layer which is orientated away from the microstructure.

## Revendications

1. Procédé d fabrication d'une lentill comportant une microstructure sur au moins une face de lentille, le procédé comprenant :
- la réalisation d'une couche support de structure, laquelle comporte une microstructure sur une surface ; et
- le moulage d'un corps principal de lentille sur la microstructure de la couche support de structure,
la couche support de structure destinée à la formation de la microstructure étant disposée sur un substrat de support avec la face opposée à la microstructure, lequel substrat est utilisé conjointement avec la couche support de structure comme coque de moulage pour le moulage du corps principal de lentille, **caractérisé en ce que**
le procédé comprend le détachement du substrat de support de la couche support de structure après le moulage du corps principal de lentille tandis que la couche support de structure reste sur le corps principal de lentille.

2. Procédé selon la revendication 1, dans lequel la couche support de structure est réalisée avec une épaisseur maximale de 1 mm, de préférence de 0,5 mm, de manière préférée entre toutes de 0,25 mm.

3. Procédé selon la revendication 1 ou 2, dans lequel la couche support de structure a une épaisseur inférieure à l'épaisseur du corps principal de lentille.

4. Procédé selon l'une des revendications précédentes, dans lequel la couche support de structure a un indice de réfraction qui est différent de l'indice de réfraction du corps principal de lentille.

5. Procédé selon l'une des revendications précédentes, dans lequel la réalisation de la couche support de structure comprend le moulage de la couche support de structure à l'aide d'un moule ayant une surface de moule dotée d'une microstructure correspondante.

6. Procédé selon l'une des revendications précédentes, dans lequel la réalisation de la couche support de structure comprend un processus d'immersion dans lequel un poinçon doté d'une microstructure correspondante est plongé et maintenu dans un bain d'immersion de telle sorte que la couche support de structure se sépare au niveau du poinçon.

7. Procédé selon l'une des revendications précédentes, dans lequel la réalisation de la couche support de structure comprend la proj ction par centrifugation et/ou la pulvérisation de la couche support de structure sur un substrat doté d'une microstructure et/ou le revêtement d'un substrat doté d'une microstructure à partir de la phase gazeuse.

8. Procédé selon l'une des revendications précédentes, dans lequel la réalisation de la couche support de structure comprend la formation de la microstructure par gaufrage et/ou poinçonnage et/ou par un procédé d'usinage et/ou par ablation au laser.

9. Procédé selon l'une des revendications précédentes, lequel comprend, après le moulage du corps principal de lentille, l'usinage mécanique de la face, opposée à la microstructure, de la couche support de structure.
